# EUROPÄISCHE PATENTANMELDUNG

(11) **EP 3 909 931 A1**
(43) Veröffentlichungstag der Anmeldung: **17.11.2021**
(21) Anmeldenummer: 20174877.9
(22) Anmeldetag: 15.05.2020
(51) Int. Cl.: C04B 7/52, C04B 28/04, C04B 28/16, C04B 40/06

(54) **FEIN AUFGEMAHLENE PORTLANDZEMENTKLINKER IN EINEM ZEMENTÄREN MEHRKOMPONENTEN-MÖRTELSYSTEM FÜR DEN EINSATZ ALS ANORGANISCHES CHEMISCHES BEFESTIGUNGSSYSTEM**

(71) Anmelder: Hilti Aktiengesellschaft, 9494 Schaan (LI)
(72) Erfinder: Schönlein, Markus, 82205 Gilching (DE); Pfeil, Armin, 86899 Landsberg am Lech (DE); Middendorf, Bernhard, 34379 Calden (DE); Schade, Tim, 34125 Kassel (DE)
(74) Vertreter: Hilti Aktiengesellschaft Corporate Intellectual Property

(57) **Zusammenfassung**

Es wird ein zementäres Mehrkomponenten-Mörtelsystem umfassend fein aufgemahlenen Portlandzementklinker mit einer Mahlfeinheit im Bereich von 6000 bis 12000 cm²/g, für den Einsatz als anorganisches chemisches Befestigungssystem für Verankerungselemente in mineralischen Untergründen beschrieben.

## Beschreibung

### Gebiet der Erfindung

Die Erfindung liegt auf dem Gebiet der chemischen Befestigung von Verankerungselementen in mineralischen Untergründen im Bereich der Bauindustrie und Befestigungstechnik, und betrifft insbesondere die chemische Befestigung von Verankerungselementen mittels eines anorganischen chemischen Befestigungssystems basierend auf fein aufgemahlenen Portlandzementklinker in einem zementären Mehrkomponenten-Mörtelsystem.

### Stand der Technik

Verbundmörtel zum Befestigen von Verankerungselementen in mineralischen Untergründen im Bereich der Bauindustrie und Befestigungstechnik sind bekannt. Diese Verbundmörtel basieren fast ausschließlich auf organischen epoxid-haltigen Harz/Härtersystemen. Es ist jedoch allgemein bekannt, dass solche Systeme umweltschädlich, teuer, potenziell gefährlich und/oder giftig für die Umwelt und die Person sind, die sie handhabt, und sie müssen häufig speziell gekennzeichnet werden. Darüber hinaus weisen organische Systeme häufig eine stark verringerte Stabilität auf, wenn sie starkem Sonnenlicht oder auf andere Weise erhöhten Temperaturen ausgesetzt werden, wodurch ihre mechanische Leistung bei der chemischen Befestigung von Verankerungselementen verringert wird.

Es besteht daher ein Bedarf an einem gebrauchsfertigen zementären Mehrkomponenten-Mörtelsystem, vorzugsweise einem zementären Zweikomponenten-Mörtelsystem, das den Systemen des Standes der Technik in Bezug auf Umweltaspekte, Gesundheit und Sicherheit, Handhabung, Lagerzeit und einem guten Gleichgewicht zwischen Abbinden und Aushärten überlegen ist. Darüber hinaus ist es von Interesse, ein System bereitzustellen, das zur chemischen Befestigung von Verankerungselementen in mineralischen Untergründen verwendet werden kann, ohne die Handhabung, Eigenschaften und die mechanische Leistung des chemischen Befestigungssystems nachteilig zu beeinflussen. Insbesondere ist ein zementäres Mehrkomponenten-Mörtelsystem wünschenswert, dass sich durch hervorragende Lastwerte auszeichnet.

In Anbetracht des Vorstehenden ist es eine Aufgabe der vorliegenden Erfindung, ein zementäres System, insbesondere ein zementäres Mehrkomponenten-Mörtelsystem, im speziellen ein zementäres Zweikomponenten-Mörtelsystem, bereitzustellen, das die Nachteile der Systeme des Standes der Technik überwindet. Insbesondere ist es eine Aufgabe ein gebrauchsfertiges zementäres Mehrkomponenten-Mörtelsystem bereitzustellen, das einfach zu handhaben und umweltfreundlich ist, das vor Gebrauch über einen bestimmten Zeitraum stabil gelagert werden kann und ein gutes Gleichgewicht zwischen Abbinden und Aushärten aufweist, und auch unter dem Einfluss erhöhter Temperaturen eine hervorragende mechanische Leistung bei der chemischen Befestigung von Verankerungselementen in mineralischen Untergründen aufweist.

Darüber hinaus ist es eine Aufgabe der vorliegenden Erfindung, ein zementäres Mehrkomponenten-Mörtelsystem bereitzustellen, das zur chemischen Befestigung von Verankerungsmitteln, vorzugsweise von Metallelementen, in mineralischen Untergründen, wie Bauwerken aus Mauerwerk, Naturstein, Beton, Durchlässigkeitsbeton oder dergleichen verwendet werden kann.

Diese und weitere Aufgaben, die aus der folgenden Beschreibung der Erfindung ersichtlich sind, werden durch die vorliegende Erfindung, wie sie in den unabhängigen Ansprüchen beschrieben ist, gelöst. Die abhängigen Ansprüche beziehen sich auf bevorzugte Ausführungsformen.

### ZUSAMMENFASSUNG DER ERFINDUNG

Die vorliegende Erfindung betrifft ein zementäres Mehrkomponenten-Mörtelsystem umfassend fein aufgemahlenen Portlandzementklinker mit einer Mahlfeinheit im Bereich von 6000 bis 12000 cm²/g, das für den Einsatz als anorganisches chemisches Befestigungssystem für Verankerungselemente in mineralischen Untergründen bestens geeignet ist, um hohe Lastwerte zu erreichen. Insbesondere betrifft die vorliegende Erfindung ein zementäres Mehrkomponenten-Mörtelsystem umfassend fein aufgemahlenen Portlandzementklinker mit einer Mahlfeinheit im Bereich von 6000 bis 12000 cm²/g, einen Sulfatträger und optional Silikastaub, das für den Einsatz als anorganisches chemisches Befestigungssystem für Verankerungselemente in mineralischen Untergründen bestens geeignet ist, um hohe Lastwerte zu erreichen.

Weiterhin betrifft die vorliegende Erfindung die Verwendung eines solchen zementären Mehrkomponenten-Mörtelsystems zur chemischen Befestigung von Verankerungsmitteln, vorzugsweise von Metallelementen, in mineralischen Untergründen, wie Bauwerken aus Mauerwerk, Naturstein, Beton, Durchlässigkeitsbeton oder dergleichen.

Noch weiterhin betrifft die vorliegende Erfindung die Verwendung von fein aufgemahlenem Portlandzementklinker mit einer Mahlfeinheit im Bereich von 6000 bis 12000 cm²/g in einem zementären Mörtelsystem als anorganisches chemisches Befestigungssystem für Verankerungselemente in mineralischen Untergründen, zur Erhöhung der Lastwerte.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch die Ausführungsbeispiele beschrieben.

### AUSFÜHRLICHE BESCHREIBUNG DER ERFINDUNG

Die folgenden Begriffe werden im Rahmen der vorliegenden Erfindung verwendet:
Der Begriff "Bindemittel" oder auch "Bindemittel-Komponente" bezieht sich im Rahmen der vorliegenden Erfindung auf den zementären Bestandteil sowie optionaler Komponenten wie beispielsweise Füllstoffe, des Mehrkomponenten-Mörtelsystems. Insbesondere wird dieser auch als A-Komponente bezeichnet.

Der Begriff "Initiator" oder auch "Initiator-Komponente" bezieht sich im Rahmen der vorliegenden Erfindung auf den wässrigen hydratisierenden Bestandteil, vorzugsweise Zugabewasser, der ein Ansteifen, Erstarren und Erhärten als Folgereaktion auslöst. Insbesondere wird dieser auch als B-Komponente bezeichnet.

Die Begriffe "aufweisen", "mit" und "haben" sollen einschließend sein und bedeuten, dass auch andere als die genannten Elemente gemeint sein können.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Verschiedene Zementarten, deren Zusammensetzung und deren Anwendungsbereiche sind aus dem Stand der Technik bekannt, jedoch ist deren Einsatz als anorganisches chemisches Befestigungssystem weithingehend noch unbekannt. Insbesondere der Einsatz eines zementären Mehrkomponenten-Mörtelsystems auf Basis von fein aufgemahlenem Portlandzementklinker.

Es ist nun herausgefunden worden, dass ein zementäres Mehrkomponenten-Mörtelsystem umfassend fein aufgemahlenen Portlandzementklinker mit einer Mahlfeinheit im Bereich von 6000 bis 12000 cm²/g, für den Einsatz als anorganisches chemisches Befestigungssystem für Verankerungselemente in mineralischen Untergründen bestens geeignet ist, um hohe Lastwerte zu erreichen, insbesondere ein zementäres Mehrkomponenten-Mörtelsystem umfassend fein aufgemahlenen Portlandzementklinker mit einer Mahlfeinheit im Bereich von 6000 bis 12000 cm²/g, einen Sulfatträger und optional Silikastaub.

Darüber hinaus zeichnet sich ein solches System, insbesondere das zementäre Mehrkomponenten-Mörtelsystem, durch positive Vorteile in Bezug auf Umweltaspekte, Gesundheit und Sicherheit, Handhabung, Lagerzeit und einem guten Gleichgewicht zwischen Abbinden und Aushärten aus, ohne die Handhabung, Eigenschaften und die mechanische Leistung des chemischen Befestigungssystems nachteilig zu beeinflussen.

Daher betrifft die vorliegende Erfindung ein zementäres Mehrkomponenten-Mörtelsystem umfassend fein aufgemahlenen Portlandzementklinker mit einer Mahlfeinheit im Bereich von 6000 bis 12000 cm²/g, für den Einsatz als anorganisches chemisches Befestigungssystem für Verankerungselemente in mineralischen Untergründen. Insbesondere betrifft die vorliegende Erfindung ein zementäres Mehrkomponenten-Mörtelsystem umfassend fein aufgemahlenen Portlandzementklinker mit einer Mahlfeinheit im Bereich von 6000 bis 12000 cm²/g, einen Sulfatträger und optional Silikastaub, für den Einsatz als anorganisches chemisches Befestigungssystem für Verankerungselemente in mineralischen Untergründen.

Das zementäre Mehrkomponenten-Mörtelsystem umfasst vorzugsweise eine Bindemittel-Komponente und eine Initiator-Komponente. Es ist bevorzugt, dass der fein aufgemahlene Portlandzementklinker in der Bindemittel-Komponente vorliegt. Besonders bevorzugt ist, dass das zementäre Mehrkomponenten-Mörtelsystem ein Zweikomponenten-Mörtelsystem ist und eine pulverförmige zementäre Bindemittel-Komponente und eine wässrige Initiator-Komponente umfasst.

Der Portlandzementklinker des zementären Mehrkomponenten-Mörtelsystems umfasst von 58 bis 70 % Calciumoxid (CaO), von 18 bis 26 % Siliciumdioxid (SiO₂), von 1 bis 10 % Aluminiumoxid (Al₂O₃) und von 1 bis 10 % Eisenoxid (Fe₂O₃). Weitere Kennwerte des Portlandzementklinkers sind Titandioxid (TiO₂), Natriumoxid (Na₂O), Kaliumoxid (K₂O), Chlorid, Sulfid, Phosphorpentoxid (P₂O₅), Schwefeltrioxid (SO₃) und Magnesiumoxid (MgO), die vorzugweise weniger als 5 % des Klinkers ausmachen.

Die Klinkerphasen des Portlandzementklinker des zementären Mehrkomponenten-Mörtelsystem umfassen von 40 bis 80 % Tricalciumsilicat (Alit) C₃S, von 5 bis 30 % Dicalciumsilicat (Belit) C₂S, von 1 bis 20 % Tricalciumaluminat C₃A, von 1 bis 20 % Calciumaluminatferrit C₄AF und andere Phasen, die in geringerer Menge im Klinker vorhanden sind.

Das zementäre Mehrkomponenten-Mörtelsystem der vorliegenden Erfindung umfasst fein aufgemahlenen Portlandzementklinker mit einer Mahlfeinheit im Bereich von 6000 bis 12000 cm²/g, bevorzugt in einem Bereich von 7000 bis 12000 cm²/g, am meisten bevorzugt in einem Bereich von 9000 bis 12000 cm²/g. In einer besonders bevorzugten Ausführungsform des zementären Mehrkomponenten-Mörtelsystems weist der fein aufgemahlene Portlandzementklinker eine Mahlfeinheit im Bereich von 9000 bis 12000 cm²/g auf.

Das zementäre Mehrkomponenten-Mörtelsystem der vorliegenden Erfindung umfasst vorzugsweise den fein aufgemahlenen Portlandzementklinker in einem Bereich von 1 Gew.-% bis 50 Gew.-%, mehr bevorzugt von 10 Gew.-% bis 40 Gew.-%, am meisten bevorzugt in einem Bereich von 20 Gew.-% bis 30 Gew.-%, bezogen auf das Gesamtgewicht des Bindemittels.

Vorzugsweise umfasst das zementäre Mehrkomponenten-Mörtelsystem ferner einen Sulfatträger und optional Silikastaub. Bevorzugt liegen der Sulfatträger und der optional Silikastaub in der Bindemittel-Komponente vor. Besonders bevorzugt liegen der fein aufgemahlene Portlandzementklinker, der Sulfatträger und optional Silikastaub, in der Bindemittel-Komponente vor.

Der Sulfatträger des zementären Mehrkomponenten-Mörtelsystems umfasst einen Sulfatträger ausgewählt aus der Gruppe bestehend aus Calciumsulfat, Natriumsulfat, Lithiumsulfat, Magnesiumsulfat und Kaliumsulfalt. Bevorzugt umfasst das zementäre Mehrkomponenten-Mörtelsystem Calciumsulfat ausgewählt aus Calciumsulfatdihydrat, Calciumsulfatanhydrit, Calciumsulfathemihydrat und Mischungen davon. In einer besonders bevorzugten Ausführungsform des zementären Mehrkomponenten-Mörtelsystems ist der Sulfatträger eine Mischung aus Anhydrit und Hemihydrat, bevorzugt mit einem Gew.-% Verhältnis 1,5:1. Der Sulfatträger steuert maßgeblich das Erstarrungsverhalten des mit Wasser angemachten Zements. Das zementäre Mehrkomponenten-Mörtelsystem der vorliegenden Erfindung umfasst vorzugsweise den Sulfatträger in einem Bereich von 1 Gew.-% bis 6 Gew.-%, mehr bevorzugt von 1.5 Gew.-% bis 5 Gew.-%, am meisten bevorzugt in einem Bereich von 2 Gew.-% bis 4 Gew.-%, bezogen auf das Gesamtgewicht der Bindemittel-Komponente.

Es hat sich vorteilhaft herausgestellt, dass hohe Lastwerte erreicht werden können, wenn der Sulfatträger mit einer Mahlfeinheit im Bereich von 6000 bis 12000 cm²/g, bevorzugt in einem Bereich von 7000 bis 10000 cm²/g, am meisten bevorzugt in einem Bereich von 8000 bis 9500 cm²/g im zementären Mehrkomponenten-Mörtelsystem vorliegt.

Der Silikastaub des zementären Mehrkomponenten-Mörtelsystem liegt in einem Bereich von 1 Gew.-% bis 10 Gew.-%, vorzugsweise von 2 Gew.-% bis 8 Gew.-%, am meisten bevorzugt in einem Bereich von 4 Gew.-% bis 6 Gew.-%, bezogen auf das Gesamtgewicht des Bindemittels, vor. Vorzugsweise hat der Silikastaub eine durchschnittliche Partikelgröße von 0,4 µm und eine Oberfläche von 180.000 bis 220.000 cm²/g bzw. 18-22 m²/g.

Alternativ kann der Silikastaub auch durch Puzzolane-Materialien bzw. durch Materialien mit Puzzolanen-Eigenschaften oder durch andere feine reaktive oder inerte Füllstoffe ersetzt werden. Dies sind zum Beispiel Korund, Calcit, Dolomit, Ziegelmehl, Reisschalenasche, Phonolith, calcinierter Ton, Flugaschen, Hüttensande, Kaolin und Metakaolin.

In einer bevorzugten Ausführungsform des zementären Mehrkomponenten-Mörtelsystem liegt der Silikastaub in einem Bereich von 5 Gew.-% bis 6 Gew.-%, bezogen auf das Gesamtgewicht des Bindemittels, vor.

Des Weiteren kann mindestens ein Füllstoff oder Füllstoff-Mischungen in der Bindemittel-Komponente vorhanden sein. Diese sind vorzugsweise ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

Der mindestens eine Füllstoff des zementären Mehrkomponenten-Mörtelsystems liegt vorzugsweise in einem Bereich von 20 Gew.-% bis 70 Gew.-%, bevorzugter von 30 Gew.-% bis 60 Gew.-%, am meisten bevorzugt in einem Bereich von 40 Gew.-% bis 50 Gew.-%, bezogen auf das Gesamtgewicht des Bindemittels vor.

In einer bevorzugten Ausführungsform des zementären Mehrkomponenten-Mörtelsystem ist der Füllstoff Sand und liegt in einem Bereich von 50 bis 55 Gew.-%, bezogen auf das Gesamtgewicht des Bindemittels, vor.

In einer besonders bevorzugten Ausführungsform der vorliegenden Erfindung ist der Füllstoff eine Mischung aus Sand und Quarzmehl. Vorzugsweise liegt der Sand in einem Bereich von 50 Gew.-% bis 55 Gew.-% und das Quarzmehl in einem Bereich von 10 Gew.-% bis 11 Gew.-% bezogen, auf das Gesamtgewicht des Bindemittels, vor.

Des Weiteren kann die Bindemittel-Komponente mindestens einen Beschleuniger oder Beschleunigermischungen in Pulverform enthalten. Es können übliche Beschleuniger für Portlandzement verwendet werden. Der Beschleuniger besteht aus mindestens einem Alkali- und/oder Erdalkalimetallsalz, das ausgewählt ist aus der Gruppe bestehend aus Hydroxiden, Chloriden, Sulfaten, Phosphaten, Monohydrogenphosphaten, Dihydrogenphosphaten, Nitraten, Carbonaten und Mischungen davon, vorzugsweise ist der mindestens eine Beschleuniger ein Alkali- und/oder Erdalkalimetallsalz, ein Calciummetallsalz, wie Calciumhydroxid, Calciumsulfat, Calciumcarbonat, Calciumchlorid, Calciumnitrat, Calciumformiat oder Calciumphosphat, ein Natriummetallsalz, wie Natriumhydroxid, Natriumsulfat, Natriumcarbonat, Natriumchlorid, Natriumnitrat, Natriumformiat oder Natriumphosphat, oder aus C-S-H-Keimen.

Des Weiteren kann die Bindemittel-Komponente weitere Zemente enthalten, wie beispielsweise calciumaluminat-basierter Zement. Des Weiteren kann die Bindemittel-Komponente Fasern enthalten, wie beispielsweise Mineralfasern, Chemiefasern, Naturfasern, Kunstfasern, Fasern aus natürlichen oder synthetischen Polymeren, Fasern aus anorganischen Stoffen, insbesondere Carbonfasern oder Glasfasern.

Die Initiator-Komponente des Mehrkomponenten-Mörtelsystems umfasst Wasser und optional ein Fließmittel. Der Wasseranteil liegt in einem Bereich von über 70 Gew.-%, vorzugsweise über 80 Gew.-%, am meisten bevorzugt über 90 Gew.-%, bezogen auf das Gesamtgewicht der Initiator-Komponente. In einer bevorzugten Ausführungsform liegt der Wasseranteil in einem Bereich von 70 Gew.-% bis 100 Gew.-%, bevorzugter von 80 Gew.-% bis 95 Gew.-%, am meisten bevorzugt in einem Bereich von 90 Gew.-% bis 95 Gew.-%, bezogen auf das Gesamtgewicht der Initiator-Komponente, vor.

Das optionale Fließmittel liegt in einem Bereich von 1 Gew.-% bis 30 Gew.-%, vorzugsweise von 5 Gew.-% bis 25 Gew.-%, am meisten bevorzugt in einem Bereich von 10 Gew.-% bis 20 Gew.-%, bezogen auf das Gesamtgewicht der Initiator-Komponente, vor. Das optionale Fließmittel ist ausgewählt aus der Gruppe bestehend aus Polyacrylsäurepolymeren mit niedrigem Mole-kulargewicht (LMW), Superweichmachern aus der Familie von Polyphosphonatpolyox und Polycarbonatpolyox, Polykondensaten, z.B. Naphthalin-Sulfonsäure-Formaldehyd-Polykondensat oder Melamin-Sulfonsäure-Formaldehyd-Polykondensat, Lignosulfonaten und Ethacryl-Superweichmachern aus der Polycarboxylatether-Gruppe, und Mischungen davon, zum Beispiel Ethacryl® G (Coatex, Arkema Group, Frankreich), Acumer® 1051 (Rohm und Haas, UK) oder Sika® VisoCrete®-20 HE (Sika, Deutschland). Geeignete Fließmittel sind im Handel erhältliche Produkte.

In einer ganz besonderen Ausführungsform des zementären Mehrkomponenten-Mörtelsystems beträgt der Wasseranteil 90 Gew.-% bis 95 Gew.-% und der Fließmittelanteil 5 Gew.-% bis 10 Gew.-%, bezogen auf das Gesamtgewicht der Initiator-Komponente.

Des Weiteren kann mindestens ein Füllstoff oder Füllstoff-Mischungen in der Initiator-Komponente vorhanden sein. Diese sind vorzugsweise ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

Des Weiteren kann die Initiator-Komponente mindestens einen Beschleuniger oder Beschleunigermischungen in wässriger Form enthalten. Es können übliche Beschleuniger für Portlandzement verwendet werden. Der Beschleuniger besteht aus mindestens einem Alkali- und/oder Erdalkalimetallsalz, das ausgewählt ist aus der Gruppe bestehend aus Hydroxiden, Chloriden, Sulfaten, Phosphaten, Monohydrogenphosphaten, Dihydrogenphosphaten, Nitraten, Carbonaten und Mischungen davon, vorzugsweise ist der mindestens eine Beschleuniger ein Alkali- und/oder Erdalkalimetallsalz, ein Calciummetallsalz, wie Calciumhydroxid, Calciumsulfat, Calciumcarbonat, Calciumchlorid, Calciumnitrat, Calciumformiat oder Calciumphosphat, ein Natriummetallsalz, wie Natriumhydroxid, Natriumsulfat, Natriumcarbonat, Natriumchlorid, Natriumnitrat, Natriumformiat oder Natriumphosphat, oder aus Master X-Seed 100 (BASF).

Die Initiator-Komponente kann zusätzlich ein Verdickungsmittel umfassen. Das Verdickungsmittel, kann ausgewählt sein aus der Gruppe bestehend aus Bentonit, Kieselsäure, Verdickungsmitteln auf der Basis von Acrylat, wie alkalilöslichen oder alkaliquellbaren Emulsionen, Quarzstaub, Ton und Titanat-Chelierungsmitteln. Angeführte Beispiele sind Polyvinylalkohol (PVA), hydrophob modifizierte alkalilösliche Emulsionen (HASE), hydrophob modifizierte Ethylenoxi-durethan-Polymere, die im Stand der Technik als HEUR bekannt sind, und Cellulose-Verdickungsmittel, wie Hydroxymethylcellulose (HMC), Hydroxyethylcellulose (HEC), hydrophob modifizierte Hydroxyethylcellulose (HMHEC), Natriumcarboxymethylcellulose (SCMC), Natriumcarboxymethyl-2-hydroxyethylcellulose, 2-Hydroxypropylmethylcellulose, 2-Hydroxyethylmethylcellulose, 2-Hydroxybutylmethylcellulose, 2-Hydroxyethylethylcellulose, 2-Hydroxypropylcellulose, Attapulgitton und Mischungen davon. Geeignete Verdickungsmittel sind im Handel erhältliche Produkte, wie Optigel WX (BYK-Chemie GmbH, Deutschland), Rheolate 1 (Elementis GmbH, Deutschland) und Acrysol ASE-60 (The Dow Chemical Company).

Die Anwesenheit oben-genannter Bestandteile verändert die gesamte anorganische Beschaffenheit des zementären Mehrkomponenten-Mörtelsystems nicht.

Die A-Komponente oder Bindemittel-Komponente, die den fein aufgemahlenen Portlandzementklinker mit einer Mahlfeinheit im Bereich von 6000 bis 12000 cm²/g, den Sulfatträger und den Silikastaub umfasst, liegt in fester Form vor, vorzugsweise in der Form eines Pulvers oder Staubes. Die B-Komponente oder Initiator-Komponente liegt in wässriger Form vor, gegebenenfalls in der Form einer Aufschlämmung oder Paste.

Das Gewichtsverhältnis zwischen der A-Komponente und der B-Komponente (A/B) liegt vorzugsweise zwischen 10/1 und 1/3, und beträgt vorzugsweise 8/1 - 4/1. Vorzugsweise umfasst das zementäre Mehrkomponenten-Mörtelsystem bis zu 80 Gew. % der A-Komponente und bis zu 40 Gew. % der B-Komponente.

Nach der getrennten Herstellung werden die A-Komponente und die B-Komponente in getrennte Behälter eingebracht, aus denen sie durch mechanisches Einwirken gemischt werden können. Insbesondere ist das zementäre Mehrkomponenten-Mörtelsystems ein Zweikomponenten-Mörtelsystem, vorzugsweise ein zementäres Zweikomponenten-Kapsel-System. Das System umfasst vorzugsweise zwei oder mehr Folienbeutel zum Trennen der härtbaren Bindemittel-Komponente und der Initiator-Komponente. Die Inhalte der Kammern, Glaskapseln oder Beuteln, wie Folienbeutel, die unter mechanischer Einwirkung, vorzugsweise durch Einbringen eines Verankerungselementes, miteinander gemischt werden, liegen vorzugsweise schon in einem Bohrloch vor. Die Anordnung in Mehrkammer-Kartuschen oder Eimern oder Sätzen von Kübeln ist auch möglich.

Das zementäre Mehrkomponenten-Mörtelsystem der vorliegenden Erfindung kann für eine chemische Befestigung von Verankerungselementen, vorzugsweise Metallelementen, wie Ankerstäben, insbesondere Gewindestäben, Bolzen, Stahlverstärkungsstangen oder dgl., in mineralischen Flächen, wie Strukturen aus Mauerwerk, Beton, durchlässigem Beton oder Naturstein, verwendet werden. Insbesondere kann das zementäre Mehrkomponenten-Mörtelsystem der vorliegenden Erfindung für eine chemische Befestigung von Verankerungselementen, wie Metallelementen, in Bohrlöchern verwendet werden. Es kann für Verankerungszwecke verwendet werden, die eine Erhöhung der Lastkapazität und/oder eine Erhöhung der Bindefestigkeit im gehärteten Zustand umfassen.

Außerdem kann das zementäre Mehrkomponenten-Mörtelsystem der vorliegenden Erfindung für die Anbringung von Fasern, Gelegen, Gewirken oder Verbundstoffen, insbesondere von Fasern mit hohem Modul, vorzugsweise von Kohlefasern, insbesondere zur Verstärkung von Gebäudestrukturen, zum Beispiel Wänden oder Decken oder Böden, und ferner für Montagekomponenten, wie Platten oder Blöcke, z.B. aus Stein, Glas oder Kunststoff, an Gebäuden oder Strukturelementen verwendet werden.

Insbesondere wird fein aufgemahlener Portlandzementklinker mit einer Mahlfeinheit im Bereich von 6000 bis 12000 cm²/g, in einem zementären Mehrkomponenten-Mörtelsystem verwendet, um die Lastwerte zu erhöhen. Vorzugsweise wird fein aufgemahlener Portlandzementklinker mit einer Mahlfeinheit im Bereich von 6000 bis 12000 cm²/g, ein Sulfatträger und optional Silikastaub, in einem zementären Zweikomponenten-Mörtelsystem verwendet, um die Lastwerte zu erhöhen.

Die folgenden Beispiele veranschaulichen die Erfindung, ohne sie dadurch einzuschränken.

### BEISPIELE

### 1. Zusammensetzung des Klinkers

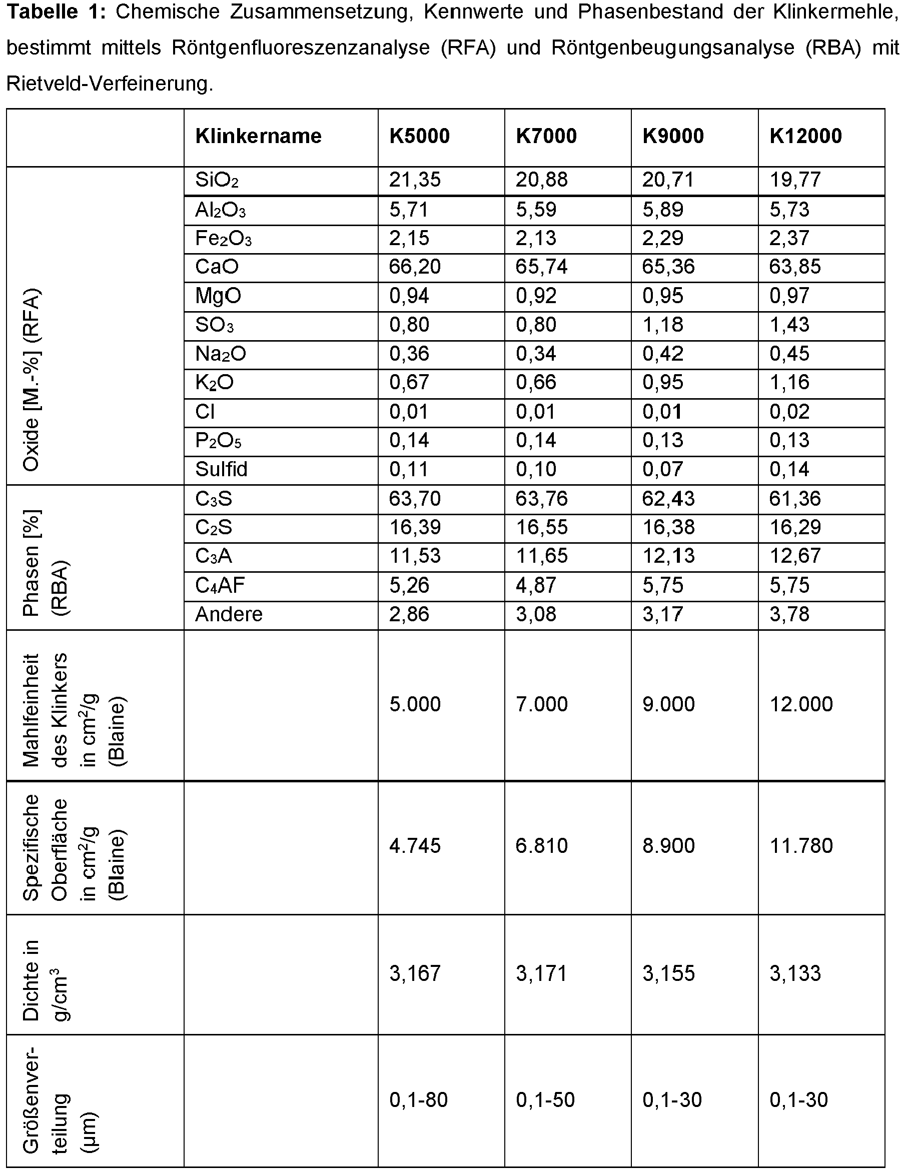

### 2. Herstellung von A-Komponente und B-Komponente

Die Herstellung der pulverförmigen Bindemittel-Komponente (A-Komponente) sowie der flüssigen Initiator-Komponente (B-Komponente) der Vergleichsbeispiele 1, 8, 10, 12 und 14 und der erfindungsgemäßen Beispiele 2-7, 9, 11, 13 und 15 erfolgt zunächst durch Vermischen der in den Tabellen 2 bzw. 3 angegebenen Bestandteile mit den in Tabelle 4 angegebenen Anteilen die angegeben sind in Gew .-% ausgedrückt.

**Tabelle 2: Zusammensetzung der A-Komponente basierend auf fein aufgemahlenem Portlandzementklinker (Gew.-%).**

| | Bindemittel | Bindemittel | Bindemittel | Bindemittel | Erstarrungsregler | Bindemittel | Füllstoff | Füllstoff |
|---|---|---|---|---|---|---|---|---|
| | **K5000** | **K7000** | **K9000** | **K12000** | **Calciumsulfat¹⁾** | **Silikastaub²⁾** | **Sand³⁾** | **Quarzmehl⁴⁾** |
| **A0** | 30,8 | | | | 1,1 | 6,5 | 51,1 | 10,5 |
| **A1** | | 29,4 | | | 1,4 | 6,2 | 52,2 | 10,8 |
| **A2** | | | 26,6 | | 4 | 5,6 | 52,8 | 10,9 |
| **A3** | | | 28,0 | | 1,7 | 6 | 53,3 | 11 |
| **A4** | | | | 24,8 | 5,4 | 5,3 | 53,5 | 11,0 |
| **A5** | | | | 26,3 | 2,9 | 5,6 | 54,1 | 11,1 |
| **A6** | | | | 27,9 | 2 | 5,8 | 54,1 | 11,2 |

| | | | | | | | | |
|---|---|---|---|---|---|---|---|---|
| ¹⁾ Calciumsulfat: Mischung aus Calciumsulfathemihydrat und Calciumsulfatanhydrit in einem Gew.-%-Verhältnis von 1:1,5; Mahlfeinheit in cm²/g (Blaine) 9.000; Größenverteilung (µm) 0,1-30. ²⁾ Silikastaub: Mahlfeinheit in cm²/g (Blaine) 180.000-220.000; Größenverteilung (µm) 0,1-10. ³⁾ Sand: Größenverteilung (µm) 125-1000. ⁴⁾ Quarzmehl: Größenverteilung (µm) 0,1-100. | | | | | | | | |

**Tabelle 3: Zusammensetzung der B-Komponente (Gew.-%).**

| | Initiator | Fließmittel |
|---|---|---|
| | **Wasser** | **Polycarboxylatether** |
| **B0** | 91,2 | 8,8 |
| **B1** | 95,1 | 4,9 |

**Table 4: Mischverhältnis von A-Komponente zu B-Komponente.**

| **A-Komponente** | **B-Komponente** | **A/B-Verhältnis** | **Wasser/Bindemittel-Verhältnis** |
|---|---|---|---|
| A0 | B0 | 0,158 | 0,4 |
| A1 | B0 | 0,17 | 0,45 |
| A2 | B0 | 0,184 | 0,5 |
| A3 | B0 | 0,184 | 0,5 |
| A4 | B0 | 0,2 | 0,55 |
| A5 | B0 | 0,2 | 0,55 |
| A6 | B0 | 0,2 | 0,55 |
| A5 | B1 | 0,2 | 0,55 |
| A6 | B1 | 0,2 | 0,55 |

### 3. Bestimmung der mechanischen Leistung

Nach der getrennten Herstellung werden die pulverförmige Bindemittel-Komponente A und die Initiator-Komponente B mit einem Mischer gemischt. Alle Proben werden 1 Minute lang gemischt. Die Mischungen werden in eine Edelstahlhülsenbohrloch mit einem Durchmesser von 12 mm, einer Verankerungstiefe von 32 mm und geschliffenen Hinterschnitten von 0,33 mm eingegossen. Unmittelbar nach dem Befüllen wird eine M8-Gewindestange mit einer Länge von 100 mm in das Bohrloch eingeführt.

Die Lastwerte der ausgehärteten Mörtelzusammensetzungen werden zu bestimmten Zeiten innerhalb von 24 Stunden mit einem Gerät zur Materialprüfung "Zwick Roell Z050" (Zwick GmbH & Co. KG, Ulm, Deutschland) bestimmt. Die Edelstahlhülse ist auf einer Platte befestigt, während die Gewindestange mit einer Mutter am Kraftmessgerät befestigt ist. Bei einer Vorlast von 500 N und einer Prüfgeschwindigkeit von 3 mm/min wird die Bruchlast durch mittiges Herausziehen der Gewindestange ermittelt. Jede Probe besteht aus einem Mittelwert von fünf Auszügen. Die Bruchlast wird als innere Festigkeit berechnet und in Tabelle 5 in N/mm² angegeben.

**Tabelle 5: Innere Festigkeit in N/mm².**

| **Beispiel** | **Komponenten** | **Temperatur** | **Abbindezeit in min** | **Innere Festigkeit in N/mm²** |
|---|---|---|---|---|
| **1** | A0 + B0 | 20°C | 5 | 5.4 |
| **2** | A1 + B0 | 20°C | 3 | 8,5 |
| **3** | A2 + B0 | 20°C | 3 | 13,8 |
| **4** | A3 + B0 | 20°C | 1 | 14,0 |
| **5** | A4 + B0 | 20°C | 2 | 19,2 |
| **6** | A5 + B0 | 20°C | 1 | 20,5 |
| **7** | A6 + B0 | 20°C | 1 | 20,7 |
| **8** | A0 + B0 | 0°C | 6 | 0,3 |
| **9** | A6 + B0 | 0°C | 1 | 4,9 |
| **10** | A0 + B0 | 5°C | 6 | 0,9 |
| **11** | A6 + B0 | 5°C | 1 | 4,5 |
| **12** | A0 + B0 | 10°C | 5 | 3,8 |
| **13** | A6 + B0 | 10°C | 1 | 11,9 |
| **14** | A0 + B1 | 20°C | 7 | 2,8 |
| **15** | A6 + B1 | 20°C | 2 | 19,3 |

Wie aus Tabelle 5 ersichtlich ist, zeigen alle messbaren erfindungsgemäßen Systeme nach 24 Stunden Aushärtung erhebliche innere Festigkeiten sowie erhöhte Lastwerte und damit verbesserte mechanische Festigkeiten im Vergleich zum Vergleichssystem ohne erhöhte Feinheit.

Wie oben gezeigt wurde, sorgt die Verwendung von fein gemahlenen Bindemitteln der vorliegenden Erfindung, insbesondere mit einer Feinheit im Bereich von 6000 bis 12000 cm2/g, vorzugsweise einer Teilchenfeinheit von 10000 bis 12000 cm²/g für eine Erhöhung der Lastwerte und damit mechanische Festigkeit auch bei tiefen Temperaturen im Vergleich zu Systemen mit geringer Partikelfeinheit von 3000 cm²/g.

## Patentansprüche

1. Zementäres Mehrkomponenten-Mörtelsystem umfassend fein aufgemahlenen Portlandzementklinker mit einer Mahlfeinheit im Bereich von 6000 bis 12000 cm²/g, für den Einsatz als anorganisches chemisches Befestigungssystem für Verankerungselemente in mineralischen Untergründen.

2. Zementäres Mehrkomponenten-Mörtelsystem nach Anspruch 1, ferner umfassend einen Sulfatträger ausgewählt aus der Gruppe bestehend aus Calciumsulfat, Natriumsulfat, Lithiumsulfat, Magnesiumsulfat und Kaliumsulfalt.

3. Zementäres Mehrkomponenten-Mörtelsystem nach Anspruch 1 oder 2, ferner umfassend Silikastaub.

4. Zementäres Mehrkomponenten-Mörtelsystem nach einem der vorhergehenden Ansprüche, ferner umfassend mindestens einen mineralischen Füllstoff ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

5. Zementäres Mehrkomponenten-Mörtelsystem nach einem der Ansprüche 2 bis 4, wobei der Sulfatträger mit einer Mahlfeinheit im Bereich von 6000 bis 12000 cm²/g vorliegt.

6. Zementäres Mehrkomponenten-Mörtelsystem nach einem der Ansprüche 2 bis 5, wobei der Sulfatträger Calciumsulfatdihydrat, Calciumsulfatanhydrit, Calciumsulfathemihydrat oder eine Mischung davon ist.

7. Zementäres Mehrkomponenten-Mörtelsystem nach einem der Ansprüche 2 bis 6, wobei der Sulfatträger eine Mischung aus Anhydrit und Hemihydrat, bevorzugt mit einem Gew.-% Verhältnis 1,5:1.

8. Zementäres Mehrkomponenten-Mörtelsystem nach einem der vorhergehenden Ansprüche, wobei das zementäre Mehrkomponenten-Mörtelsystem ein Zweikomponenten-Mörtelsystem ist, vorzugsweise ein Zweikomponenten-Kapsel-Mörtelsystem.

9. Zementäres Mehrkomponenten-Mörtelsystem nach Anspruch 8, wobei das Zweikomponenten-Kapsel-Mörtelsystem eine pulverförmige A-Komponente, umfassend den fein aufgemahlenen Portlandzementklinker mit einer Mahlfeinheit im Bereich von 6000 bis 12000 cm²/g, den Sulfatträger und den Silikastaub, und eine wässrige B-Komponente, umfasst.

10. Zementäres Mehrkomponenten-Mörtelsystem nach Anspruch 9, wobei die wässrige B-Komponente Wasser und ein Fließmittel umfasst.

11. Zementäres Mehrkomponenten-Mörtelsystem nach einem der vorhergehenden Ansprüche, wobei der fein aufgemahlenen Portlandzementklinker in einem Bereich von 1 Gew.-% bis 50 Gew.-%, bezogen auf das Gesamtgewicht des Bindemittels, vorliegt.

12. Zementäres Mehrkomponenten-Mörtelsystem nach einem der vorhergehenden Ansprüche, wobei der Sulfatträger in einem Bereich von 1 Gew.-% bis 6 Gew.-%, bezogen auf das Gesamtgewicht des Bindemittels, vorliegt.

13. Zementäres Mehrkomponenten-Mörtelsystem nach einem der vorhergehenden Ansprüche, wobei der Silikastaub in einem Bereich von 1 Gew.-% bis 10 Gew.-%, bezogen auf das Gesamtgewicht des Bindemittels, vorliegt.

14. Verwendung von fein aufgemahlenen Portlandzementklinker mit einer Mahlfeinheit im Bereich von 6000 bis 12000 cm²/g in einem zementären Mehrkomponenten-Mörtelsystem als anorganisches chemisches Befestigungssystem für Verankerungselemente in mineralischen Untergründen, zur Erhöhung der Lastwerte.

15. Verwendung nach Anspruch 14, wobei das zementäre Mehrkomponenten-Mörtelsystem ferner einen Sulfatträger und optional Silikastaub umfasst.

16. Verwendung nach Anspruch 15, wobei das zementäre Mehrkomponenten-Mörtelsystem ein Zweikomponenten-Mörtelsystem ist, wobei das Zweikomponenten-Mörtelsystem eine pulverförmige A-Komponente, umfassend den fein aufgemahlenen Portlandzementklinker mit einer Mahlfeinheit im Bereich von 6000 bis 12000 cm²/g, den Sulfatträger und den Silikastaub, und eine wässrige B-Komponente, umfasst.
